# DEMANDE DE BREVET EUROPEEN

(11) **EP 0 857 947 A1**
(43) Date de publication de la demande: **12.08.1998**
(21) Numéro de dépôt: 98400218.8
(22) Date de dépôt: 03.02.1998
(51) Int. Cl.: G01C 19/70

(54) **Dispositif de fixation du bloc optique d'un gyromètre laser triaxial sur un dispositif d'activation**

(30) Priorité: 05.02.1997 FR 9701270
(71) Demandeur: SEXTANT AVIONIQUE, 78140 Velizy Villacoublay (FR)
(72) Inventeur: Jaulain, Yves, 94117 Arcueil Cedex (FR); Bonnaudet, Etienne, 94117 Arcueil Cedex (FR); Loil, Eric, 94117 Arcueil Cedex (FR); Cordonnier, Jacques, 94117 Arcueil Cedex (FR); Boura, André, 94117 Arcueil Cedex (FR)
(74) Mandataire: Beylot, Jacques

(57) **Abrégé**

Dans le gyromètre laser selon l'invention, les trois cavités optiques résonnantes du bloc (1) sont reliées à une chambre cathodique par l'intermédiaire de trois capillaires cathodiques et à une chambre d'équilibrage par l'intermédiaire de trois capillaires d'équilibrage. L'axe de la cathode (K) est confondu avec l'axe d'activation. L'activation du bloc (1) s'effectue par l'intermédiaire d'une couronne d'activation (CA₂) en contact thermique avec la cathode (K), de manière à assurer une dissipation de la chaleur engendrée au niveau de la cathode (K).

L'invention permet de résoudre à la fois les problèmes relatifs au balourdage et aux gradients thermiques.

## Description

La présente invention a pour objet un dispositif de fixation du bloc optique d'un gyromètre laser triaxial sur un dispositif d'activation.

Elle concerne plus particulièrement un gyromètre laser à optique monobloc comportant un bloc optique, par exemple en quartz ou en zérodur comprenant trois cavités optiques résonnantes (une par axe de détection) intercommunicantes, par exemple du type de celui qui se trouve décrit dans le brevet FR No 80 06298, déposé le 21 mars 1980 au nom de la Société Française d'Equipements pour la Navigation Aérienne (S.F.E.N.A.), cédé à Sextant Avionique.

Dans cet exemple, l'ensemble de ces trois cavités forme un octaèdre régulier présentant huit faces triangulaires. Ces cavités présentent chacune une forme carrée et s'étendent dans les trois plans orthogonaux (respectivement perpendiculaires aux trois axes sensibles). Elles sont agencées de manière à ce que chacun des angles d'une cavité coïncide et communique avec l'angle d'une autre cavité. Un miroir associé à chaque couple en coïncidence est orienté de manière à être utilisé par les deux cavités formant ledit couple. Dans chaque cavité, l'un des miroirs dit miroir de lecture est associé à un prisme mélangeur qui permet d'engendrer un phénomène d'interférences permettant de détecter les mouvements du gyromètre et donc du véhicule qui le supporte. Un autre miroir, dit miroir d'asservissement, est monté sur un support transducteur de manière à pouvoir asservir la longueur de la cavité en vue d'obtenir une puissance de sortie maximum. Chacune des cavités renferme un gaz sous faible pression et est munie d'au moins une cathode et de deux anodes convenablement placées, de manière à provoquer une excitation des électrons des atomes de gaz et à produire à l'intérieur de la cavité deux faisceaux de rayonnement contrapropagatifs qui se propagent en sens inverse le long du parcours optique.

Pour compenser l'écart de fréquence entre les deux ondes contrapropagatives, on engendre deux décharges symétriques dans la cavité grâce à une cathode dont le logement cathodique est en communication, grâce à deux capillaires cathodiques, avec deux régions opposées de la cavité où l'on souhaite obtenir les deux décharges.

En fait, dans un gyromètre triaxe du type susdit, on utilise une seule cathode reliant les trois cavités par l'intermédiaire de trois capillaires.

Cette cathode équipe une chambre cathodique dont l'axe Δ est perpendiculaire à une face cathodique du susdit octaèdre délimitée par trois segments capillaires appartenant respectivement aux trois cavités. Cette chambre est connectée aux trois cavités, au niveau des angles de la face cathodique par trois capillaires cathodiques disposés symétriquement par rapport à l'axe Δ selon une symétrie d'ordre 3.

Par ailleurs, le gyromètre comprend un mécanisme d'activation permettant d'engendrer un mouvement de rotation alternatif du bloc selon un axe d'activation.

Il s'avère que dans un gyromètre de ce type, la cathode constitue une source de chaleur concentrée d'un même côté du bloc optique et engendre donc dans le bloc un gradient thermique perturbant les écoulements de flux gazeux.

Par ailleurs, pour réduire les mouvements coniques du bloc qui sont susceptibles de perturber le résultat des mesures, il s'avère nécessaire de concevoir le bloc de manière à ce que le centre de gravité et le centre d'inertie se trouvent sur l'axe d'activation.

L'invention a donc plus particulièrement pour but d'accroître les performances du gyromètre laser précédemment défini en résolvant à la fois les problèmes de balourdage et de gradient thermique tout en simplifiant considérablement le montage du bloc sur le mécanisme d'activation.

Pour parvenir à ce résultat, ce gyromètre est caractérisé en ce que l'axe de la cathode est confondu avec l'axe d'activation, et en ce que le mécanisme d'activation comprend une roue d'activation dont la couronne d'activation est en contact thermique avec la cathode de manière à assurer une dissipation de la chaleur engendrée au niveau de la cathode.

Dans une première réalisation, la roue d'activation pourra occuper une position polaire. Dans ce cas, elle pourra être disposée autour de la cathode en contact thermique avec celle-ci. Dans ce cas, l'entraînement en rotation du bloc optique pourra être assuré par des cales solidaires de la couronne d'activation et venant se coller sur des arêtes chanfreinées du bloc optique bordant une face du bloc comportant la cathode.

Avantageusement, ce mécanisme d'activation pourra en outre comprendre une roue d'équilibrage faisant intervenir une couronne d'équilibrage solidarisée au bloc par l'intermédiaire de cales venant se fixer par collage sur une arête chanfreinée bordant une face triangulaire opposée à la face cathodique et parallèle à celle-ci.

Dans une deuxième réalisation, la couronne d'activation pourra occuper une position équatoriale et être fixée sur le bloc grâce à deux séries de cales venant s'appliquer sur les faces du bloc de part et d'autre du plan équatorial. Dans ce cas, la couronne d'activation pourra être solidaire d'une couronne collectrice de chaleur coaxiale disposée autour de la cathode et en contact thermique avec celle-ci. Une couronne d'équilibrage coaxiale pourra être en outre disposée à l'opposé de la couronne collectrice.

Des modes d'exécution de l'invention seront décrits ci-après, à titre d'exemples non limitatifs, avec référence aux dessins annexés dans lesquels :

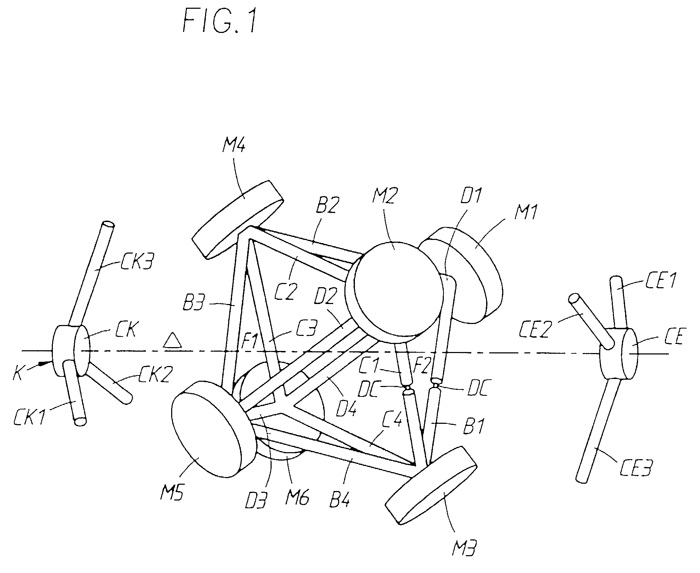

La figure 1 est une représentation en perspective des cavités optiques d'un bloc optique d'un gyromètre laser selon l'invention ;
La figure 2 est une représentation schématique illustrant le principe de montage polaire d'une roue d'activation autour de la cathode du bloc ;
La figure 3 est une représentation similaire d'un montage faisant intervenir une roue d'activation polaire et une roue d'équilibrage ;
La figure 4 est une vue en perspective éclatée d'un montage du type de celui de la figure 3 monté dans un boîtier gyrométrique ;
La figure 5 est une représentation schématique illustrant le principe du montage équatorial d'un bloc optique sur une roue d'activation ;
La figure 6 est une vue en perspective éclatée des différentes pièces du montage équatorial illustré sur la figure 5 ;
La figure 7 est une vue en perspective du montage en position assemblée ;
La figure 8 est une vue de dessus du montage représenté figure 6.

Dans ces exemples, le gyromètre comprend un bloc optique 1 de forme octaédrique à arêtes chanfreinées à l'intérieur duquel sont réalisées, dans trois plans orthogonaux, trois cavités B, C, D comprenant les segments capillaires B₁ à B₄ - C₁ à C₄ - D₁ à D₄ et délimitant chacune un parcours optique de forme carrée.

Ces cavités B, C, D sont agencées de manière à ce que chacun des angles d'une cavité coïncide et communique avec l'angle d'une autre cavité. Elles définissent donc, dans l'espace intérieur du bloc, un octaèdre régulier présentant huit faces triangulaires parallèles à celles du bloc et six sommets au niveau desquels sont placés six miroirs respectifs M₁, M₂, M₃, M₄, M₅, M₆ qui s'étendent respectivement dans les plans des faces d'un cube dans lequel l'octaèdre se trouve inscrit. Dans cet exemple, les miroirs M₁, M₂, M₃ sont des miroirs de lecture, tandis que les miroirs M₄, M₅, M₆ sont associés à des transducteurs piézoélectriques pour assurer l'asservissement des cavités.

Pour engendrer les couples de faisceaux contrapropagatifs à l'intérieur des trois cavités B, C, D, le gyromètre comprend une cathode K et six anodes A.

La cathode K équipe une chambre cathodique CK dont l'axe Δ est perpendiculaire à la face cathodique F₁ de l'octaèdre délimité par les segments capillaires B₃, C₃, D₃ et qui passe par le centre de cette face F₁. Cette chambre CK qui est extérieure au volume octaédrique défini par les cavités B, C, D, communique avec celles-ci au niveau des trois miroirs translatables M₄, M₅, M₆ qui définissent la face F₁, par l'intermédiaire de trois capillaires respectifs CK₁, CK₂, CK₃. Ces trois capillaires cathodiques sont disposés symétriquement selon une symétrie d'ordre 3 par rapport à l'axe Δ.

Ces trois capillaires CK₁, CK₂, CK₃ (ou débouchés de cathode) pennettent l'ionisation des capillaires actifs entre cathode K et anode A.

Dans cet exemple, la cathode K comprend une partie externe de forme cylindrique, coaxiale à l'axe Δ et qui est fixée sur le bloc au niveau d'une face triangulaire parallèle à la face F₁.

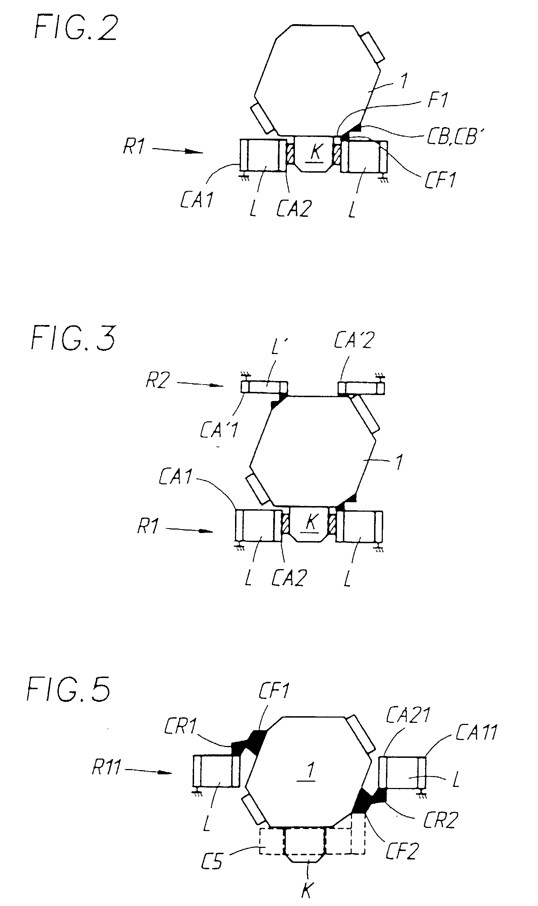

Les six anodes A, dont deux seulement ont été représentées sur la figure 2, sont disposées de manière à obtenir dans chaque cavité un couple de zones de décharge "zones actives" symétriques par rapport à un axe de symétrie distinct de l'axe de symétrie Δ. Chaque couple d'anode A s'étend dans le plan de la cavité B, C, D correspondante.

L'équilibrage thermique et thermodynamique est ici obtenu au moyen d'une chambre d'équilibrage CE de forme cylindrique, sensiblement identique à celle de la chambre cathodique CK et disposée coaxialement, relativement à cette dernière, à l'extérieur du volume octaédrique en regard de la face F₂ opposée à la face F₁ (ces deux faces étant perpendiculaires à l'axe Δ). Cette face F₂ est délimitée par trois segments capillaires B₁, C₁, D₁ qui présentent chacun dans leur région centrale un diaphragme DC. Ces trois diaphragmes DC sont disposés symétriquement, selon une symétrie d'ordre 3 par rapport à l'axe Δ.

La chambre d'équilibrage CE communique avec les trois cavités B, C, D au niveau des trois miroirs M₁, M₂, M₃ qui définissent la face F₂, grâce à trois capillaires d'équilibrage CE₁, CE₂, CE₃ disposés symétriquement, selon une symétrie d'ordre 3, à 120° l'un de l'autre.

Pour respecter la symétrie des écoulements, les trois capillaires CE₁, CE₂, CE₃ peuvent être disposés dans un même plan perpendiculaire à l'axe Δ. Il en est de même pour les trois capillaires CK₁, CK₂, CK₃.

Grâce à ces dispositions, la chambre d'équilibrage CE réalise un équilibre des pressions, côté anode A de chacune des six zones actives. L'ensemble comprenant la chambre cathodique CK et les trois capillaires CK₁, CK₂, CK₃ qui lui sont associés assure, quant à lui, l'égalisation des pressions des six zones actives, côté cathode K.

En conséquence, les six zones actives sont soumises à une même différence de pression et donnent lieu aux mêmes écoulements, même dans le cas où ces écoulements sont perturbés par des gradients thermiques, lesquels sont minimisés pour les raisons précédemment décrites.

Comme précédemment mentionné, le gyromètre selon l'invention comprend un mécanisme d'activation dont l'axe d'activation est confondu avec l'axe Δ de façon à ce que les trois cavités du bloc optique tournent à la même vitesse.

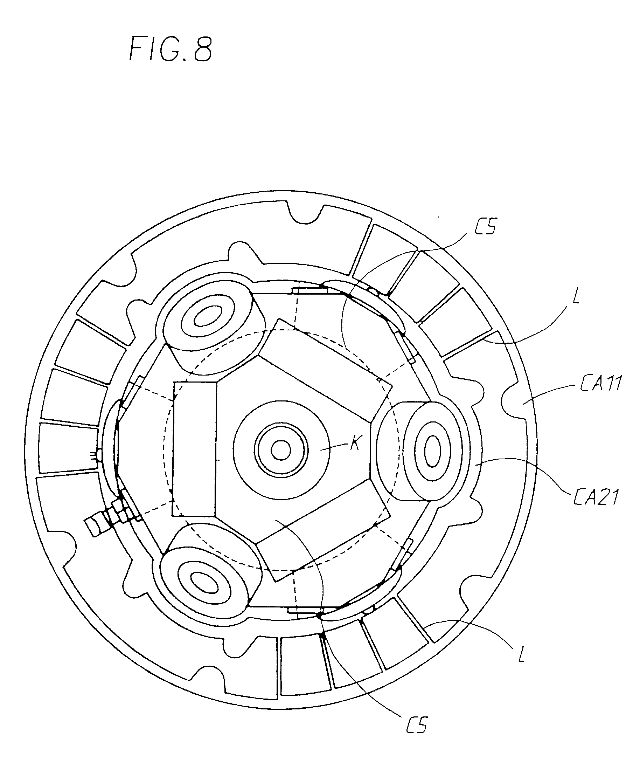

Un tel mécanisme peut être réalisé selon l'une des trois variantes d'exécution illustrées sur les dessins, à savoir : un mécanisme à une roue polaire (figure 2), un mécanisme à deux roues polaires (figures 3 et 4), et un mécanisme à une roue équatoriale (figures 5 à 8).

Dans l'exemple représenté figure 2, le mécanisme d'activation comprend tout d'abord une roue d'activation R₁ comprenant deux couronnes coaxiales CA₁, CA₂ reliées l'une à l'autre par une pluralité d'ailettes radiales L. Ces ailettes L comportent un élément moteur et de détection piézoélectrique relié à un amplificateur de manière à provoquer un mouvement de rotation alternatif de l'une des couronnes CA₂ par rapport à l'autre CA₁.

La fixation du bloc optique 1 sur la couronne centrale CA₂ (couronne d'activation) du mécanisme d'activation s'effectue au moyen d'une couronne de fixation CF₁, sensiblement de même diamètre que la couronne d'activation CA₂ sur laquelle elle peut s'assembler coaxialement par vissage.

Cette couronne de fixation CF₁ qui est destinée à être disposée coaxialement à la cathode K, comprend trois couples de cales biseautées (dont une seule est visible) situés à 120° l'un de l'autre, et destinés à venir respectivement se coller sur les régions centrales des arêtes chanfreinées entourant la face F₁ du bloc.

La liaison entre la surface intérieure cylindrique de la couronne CA₂ et la surface cylindrique extérieure de la cathode K peut être réalisée par contact direct ou avec interposition d'une matière thermiquement bonne conductrice.

En effet, le but de cette liaison est d'assurer une dissipation thermique de la chaleur engendrée au niveau de la cathode K en la transférant dans la structure porteuse du gyromètre qui joue alors le rôle de radiateur, par l'intermédiaire de la roue d'activation R₁. Il s'avère que ce transfert thermique est particulièrement efficace du fait des bonnes qualités de conductibilité thermique de la structure du mécanisme d'activation, laquelle est monobloc et ne comprend donc pas de discontinuité dans le transfert thermique. En outre, la présence des nombreuses ailettes L permet au mécanisme d'activation de jouer lui-même un rôle de radiateur sur lequel il est possible de faire circuler un flux de fluide de refroidissement. Il convient de préciser que dans cet exemple, la fonction de la liaison cathode K/couronne CA₂ se limite au transfert thermique et n'est pas d'assurer la transmission au bloc optique 1 du mouvement de rotation engendré par le mécanisme d'activation. En effet, dans le but d'éviter des contraintes susceptibles de provoquer un décollement de la cathode K, cette liaison pourra avantageusement comprendre une liaison glissante (interposition d'un gel ou d'un lubrifiant thermiquement bon conducteur). Elle pourra en outre comprendre une couronne électriquement isolante de manière à éviter tout risque de conduction électrique entre la cathode K qui est portée à haute tension et la structure métallique du capteur.

En fait, la transmission du couple entre la couronne CA₂ et le bloc 1 s'effectue essentiellement par les cales biseautées CB, CB' qui exercent une pression d'application sur les facettes chanfreinées du bloc 1 bordant la face triangulaire F₁ sans engendrer de contrainte en cisaillement susceptible de provoquer un décollement.

Les couples de cales CB, CB' jouent également un rôle de transfert et de régulation thermique. En effet, elles assurent ici une dissipation de la chaleur engendrée dans le bloc au niveau de la chambre cathodique, et des capillaires cathodiques.

Grâce à ces dispositions, on obtient donc à la fois un excellent équilibrage du bloc 1 et donc une réduction correspondante du mouvement conique et à la fois un refroidissement avec symétrisation et homogénéisation thermique du bloc 1.

Le montage à deux roues polaires illustré sur les figures 3 et 4 fait intervenir, d'une part, une roue d'activation R₁ similaire à celle décrite dans la variante de la figure 2 et, d'autre part, une roue d'équilibrage R₂.

Dans cet exemple, le mécanisme d'activation comprend tout d'abord une roue d'activation R₁ comprenant deux couronnes coaxiales CA₁, CA₂ reliées l'une à l'autre par une pluralité d'ailettes radiales L. Ces ailettes L comportent un élément moteur et de détection piézoélectrique relié à un amplificateur de manière à provoquer un mouvement de rotation alternatif de l'une des couronnes CA₂ par rapport à l'autre CA₁.

La fixation du bloc optique 1 sur la couronne centrale CA₂ (couronne d'activation) du mécanisme d'activation s'effectue au moyen d'une couronne de fixation CF₁, sensiblement de même diamètre que la couronne d'activation CA₂ sur laquelle elle peut s'assembler coaxialement par vissage.

Cette couronne de fixation CF₁ qui est destinée à être disposée coaxialement à la cathode K, comprend trois couples de cales biseautées situés à 120° l'un de l'autre, et destinés à venir respectivement se coller sur les régions centrales des arêtes chanfreinées entourant la face F₁ du bloc.

La roue d'équilibrage R₂ comprend, quant à elle, deux couronnes coaxiales CA'₁, CA'₂ reliées l'une à l'autre par une pluralité d'ailettes radiales flexibles L'.

D'une façon analogue à la précédente, la fixation de la couronne CA'₂ sur le bloc optique 1 (à l'opposé de son plan équatorial relativement à la roue d'activation R₁) s'effectue au moyen d'une couronne de fixation CF₂ sensiblement de même diamètre que la couronne CF₁ et identique à la couronne CA'₂ sur laquelle elle peut s'assembler coaxialement à l'aide de vis.

Cette couronne de fixation CF₂ qui est destinée à être disposée coaxialement à la chambre d'équilibrage CE comprend trois couples de cales biseautées CB, CB' situées à 120° l'une de l'autre et destinées à venir respectivement se coller sur les régions centrales des arêtes chanfreinées entourant la face F₂.

L'ensemble comprenant le bloc optique 1 et les deux roues R₁, R₂ est logé dans un boîtier gyrométrique B dont la surface intérieure cylindrique est sensiblement au diamètre extérieur des couronnes. Des moyens de fixation sont prévus pour assurer le maintien des couronnes CA₁, CA'₁ sur le boîtier B en assurant à la fois une solidarisation mécanique des deux couronnes et une liaison thermique. De ce fait, le boîtier B permet de dissiper la chaleur engendrée dans le bloc optique 1 (rôle de radiateur) et de réduire le gradient thermique entre la cathode K et la chambre d'équilibrage CE en réalisant un court-circuit thermique.

Un avantage important de cette solution consiste en ce qu'elle permet un excellent équilibrage du bloc optique 1 et une réduction correspondante du mouvement conique.

Dans l'exemple illustré sur les figures 5 à 8, le mécanisme d'activation fait intervenir une roue d'activation R₁₁ similaire aux roues R₁ précédemment décrites mais dont la couronne d'activation CA₂₁ présente un diamètre intérieur sensiblement égal au diamètre du cercle dans lequel se trouve inscrite la section du bloc 1 au niveau de son plan équatorial (perpendiculaire à l'axe Δ).

La fixation de la couronne d'activation CA₂₁ sur le bloc 1 est alors assurée au moyen de deux couronnes de fixation coaxiales CA'₂₁, CA'₂₂ venant respectivement se fixer, par exemple à l'aide de vis, sur les deux faces radiales opposées de la couronne CA₂₁ et au moyen de cales de fixation CF₁, CF₂ tenues par des crochets CR₁, CR₂ respectivement solidaires des couronnes CA'₂₁, CA'₂₂ et qui s'étendent axialement en saillie par rapport aux faces radiales externes desdites couronnes CA₂₁ et CA₂₂.

Dans cet exemple, chacun des crochets CR₁, CR₂ présente une forme sensiblement parallélépipédique dans laquelle la face intérieure (orientée vers l'axe Δ) comporte une cavité diédrique CD dont l'arête s'étend dans un plan perpendiculaire à l'axe Δ.

Les cales de fixation CF₁, CF₂ présentent une face de fixation FX de forme rectangulaire et une face arrière bombée comportant une protubérance P de section incurvée qui s'étend d'un bord latéral à l'autre de la cale.

Cette protubérance P est destinée à venir s'engager dans la cavité diédrique CD d'un crochet CR₁, CR₂ tout en permettant à la cale CF₁, CF₂ de s'orienter de manière à venir s'appliquer sur l'une des faces triangulaires du bloc optique 1.

Dans cet exemple, chaque face externe des couronnes CA₂₂, CA₂₁ porte trois crochets CR₂, CR₁ à 120° l'un de l'autre associés à trois cales CF₂, CF₁ venant s'appliquer sur les trois faces triangulaires adjacentes à la face cathodique F₁ ou à la face d'équilibrage F₂.

Un avantage important de ce mode de fixation consiste en ce qu'il permet au montage un autocentrage du bloc 1 sur la roue d'activation R₁₁. Compte tenu de la répartition des cales CF₁, CF₂ de part et d'autre du plan équatorial, on obtient une fixation purement mécanique (par pincement) et démontable du bloc (qui ne nécessite pas de collage).

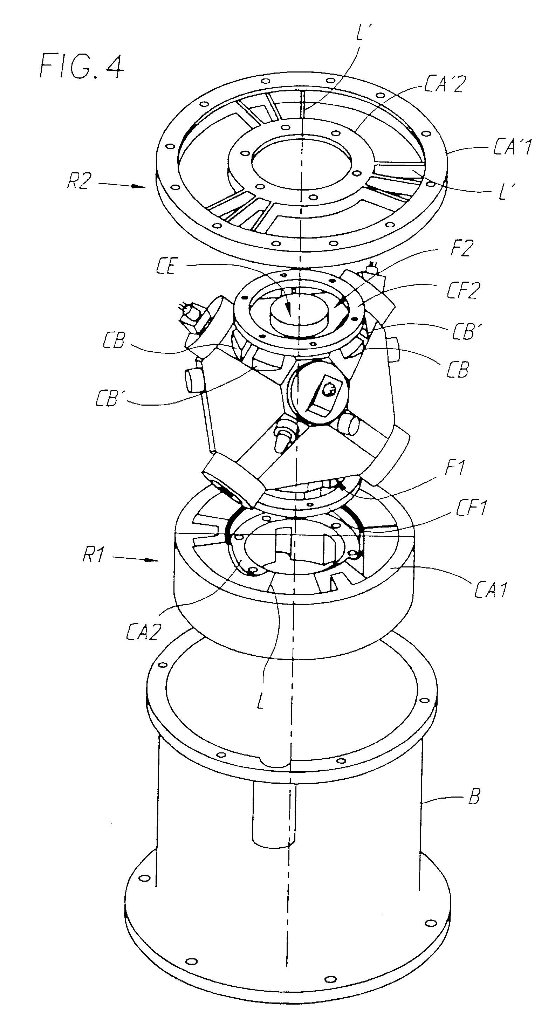

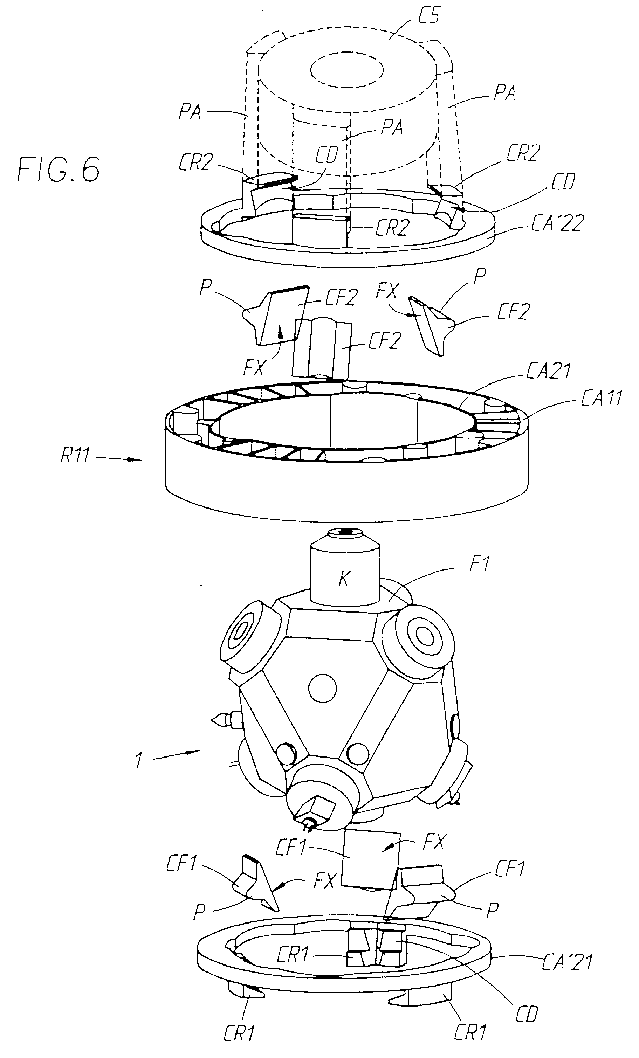

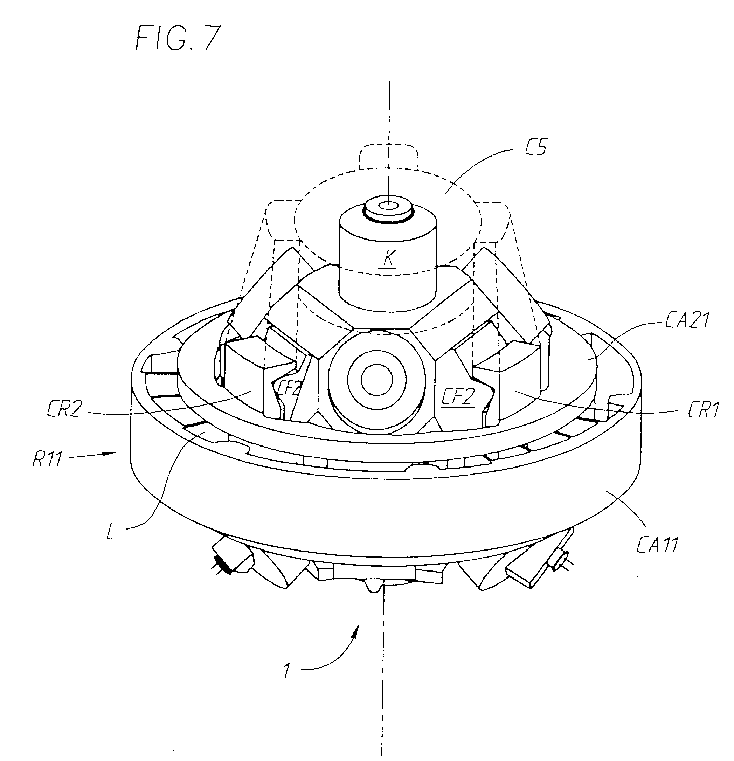

Le refroidissement de la cathode K est obtenu ici au moyen d'une couronne supplémentaire coaxiale CS dont le diamètre intérieur est sensiblement égal au diamètre extérieur de la cathode K et qui est solidarisée à la couronne CA'₂₂ grâce à des prolongements axiaux PA des crochets CR₂, l'ensemble couronne CS/prolongements axiaux PA étant indiqué en traits interrompus sur les figures 6 et 7. Bien entendu, la couronne CS devra être réalisée en un matériau thermiquement bon conducteur mais électriquement isolant et ce, compte tenu du fait que la cathode K est portée à haute tension.

Il s'avère que les structures précédemment décrites présentent de multiples avantages, tant en ce qui concerne leur réalisation, leur intégration à l'intérieur d'un boîtier, leur tenue aux environnements mécaniques sévères (symétrie, limitation des efforts transmis au bloc, limitation du mouvement conique dû à des défauts d'équilibrage, reprise des efforts de dilatation), qu'en ce qui concerne les problèmes relatifs au fonctionnement du gyromètre (homogénéité thermique, amélioration de la dissipation thermique de la cathode, minimisation des gradients thermiques et homogénéisation des écoulements à l'intérieur des capillaires).

En outre, elles se prêtent bien à leur intégration à l'intérieur d'un boîtier.

## Revendications

1. Gyromètre laser triaxial du type comprenant un bloc optique comprenant trois cavités optiques résonnantes communicantes (B, C, D) qui forment un octaèdre régulier présentant huit faces triangulaires, chacune des cavités présentant quatre segments capillaires formant un carré (B₁ à B₄, C₁ à C₄, D₁ à D₄) perpendiculaire à un axe sensible correspondant, ces cavités étant agencées de manière à ce que chacun des angles d'une cavité (B, C, D) coïncide et communique avec l'angle d'une autre cavité, un miroir (M₁ à M₆) associé à chaque couple d'angles en coïncidence étant orienté de manière à être utilisé par les deux cavités formant ledit couple, chaque cavité (B, C, D) utilisant quatre miroirs dont un miroir de lecture (M₁ à M₃) et un miroir d'asservissement de longueur de cavité (M₄ à M₆), cette cavité étant reliée à une chambre cathodique (CK) par l'intennédiaire de deux capillaires cathodiques (CK₁, CK₂, CK₃) débouchant au niveau de deux miroirs successifs (M₄, M₅, M₆) et à une chambre d'équilibrage (CE), par l'intermédiaire de deux capillaires d'équilibrage (CE₁, CE₂, CE₃) débouchant au niveau des deux autres miroirs (M₁, M₂, M₃), ledit gyromètre comprenant en outre un mécanisme d'activation permettant d'entraîner le bloc (1) selon un mouvement alternatif de rotation autour d'un axe d'activation,
caractérisé en ce que l'axe (Δ) de la cathode (K) est confondu avec l'axe d'activation, et en ce que le mécanisme d'activation comprend une roue d'activation (R₁) dont la couronne d'activation (CA₂) est en contact thermique avec la cathode (K) de manière à assurer une dissipation de la chaleur engendrée au niveau de la cathode (K).

2. Gyromètre selon la revendication 1, caractérisé en ce que la susdite roue d'activation (R₁) occupe une position polaire et est disposée autour de la cathode (K), en contact thermique avec celle-ci.

3. Gyromètre selon la revendication 2, caractérisé en ce que l'entraînement en rotation du bloc optique (1) est assuré au moyen de cales (CB, CB') solidaires de la couronne d'activation (CA₂) et venant se fixer sur les arêtes chanfreinées du bloc optique bordant la face cathodique (F₁) du bloc (1).

4. Gyromètre selon la revendication 3, caractérisé en ce qu'il comprend trois couples de cales (CB, CB') situés à 120° l'un de l'autre et destinés à venir se coller sur les régions centrales des arêtes chanfreinées entourant la susdite face (F₁).

5. Gyromètre selon l'une des revendications précédentes, caractérisé en ce que le mécanisme d'activation comprend en outre une roue d'équilibrage (R₂) faisant intervenir une couronne d'équilibrage (CA'₂) solidarisée au bloc (1) par l'intermédiaire de cales (CB, CB') venant se fixer par collage sur une arête chanfreinée bordant une face triangulaire (F₂) opposée à la face cathodique (F₁) et parallèle à celle-ci.

6. Gyromètre selon la revendication 5, caractérisé en ce que la couronne d'équilibrage (CA'₂) est solidarisée au bloc par l'intermédiaire de trois couples de cales (CB, CB') disposés à 120° l'un de l'autre et destinés à venir respectivement se coller sur la partie centrale des arêtes chanfreinées entourant la face triangulaire (F₂).

7. Gyromètre selon la revendication 1, caractérisé en ce que la couronne d'activation (CA₂₁) occupe une position équatoriale et est fixée sur le bloc (1) grâce à deux séries de cales (CR₁, CR₂) venant s'appliquer sur les faces du bloc (1), de part et d'autre du plan équatorial.

8. Gyromètre selon la revendication 7, caractérisé en ce que la couronne d'activation (CA₂₁) est solidaire d'une couronne collectrice de chaleur (CS) coaxiale disposée autour de la cathode (K) et en contact thermique avec celle-ci.

9. Gyromètre selon la revendication 8, caractérisé en ce que la couronne d'activation (CA₂₁) est solidaire d'une couronne d'équilibrage disposée à l'opposé de la couronne collectrice (CS).

10. Gyromètre selon l'une des revendications précédentes, caractérisé en ce qu'il est logé à l'intérieur d'un boîtier gyrométrique (B) en contact thermique avec la roue d'activation (R₁) de manière à jouer le rôle de radiateur.
